(19) Europäisches Patentamt
European Patent Office
Office européen des brevets

(11) **EP 2 056 038 B1**

(12) **EUROPÄISCHE PATENTSCHRIFT**

(45) Veröffentlichungstag und Bekanntmachung des Hinweises auf die Patenterteilung:
**08.08.2018   Patentblatt 2018/32**

(51) Int Cl.:
*F24H 4/00* (2006.01)      *F25B 27/02* (2006.01)

(21) Anmeldenummer: **08018132.4**

(22) Anmeldetag: **16.10.2008**

(54) **Kombination einer Hochtemperatur-Brennstoffzelle mit einer Adsorptionswärmepumpe**

Combination of a high temperature fuel cell with an adsorption heat pump

Combinaison d'une cellule combustible à haute température et d'une pompe à chaleur d'adsorption

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.10.2007   AT 16962007**

(43) Veröffentlichungstag der Anmeldung:
**06.05.2009   Patentblatt 2009/19**

(73) Patentinhaber: **Vaillant GmbH**
**42859 Remscheid (DE)**

(72) Erfinder:
• **Badenhop, Thomas**
**51688 Wipperfürth (DE)**

• **Berg, Joachim**
**42859 Remscheid (DE)**
• **Götz, Klaus**
**42653 Solingen (DE)**
• **Kohlhage, Jörg**
**45329 Essen (DE)**
• **Kraus, Matthias**
**42929 Wermelskirchen (DE)**
• **Oerder, Bodo**
**42897 Remscheid (DE)**
• **Paulus, Jochen**
**42655 Solingen (DE)**

(56) Entgegenhaltungen:
EP-A2- 1 108 964      US-A1- 2003 157 386
US-A1- 2005 019 631

**Beschreibung**

Die Erfindung bezieht sich auf die Kombination einer Hochtemperatur-Brennstoffzelle mit einer Adsorptionswärmepumpe.

Bei Brennstoffzellen reagiert in der Regel Wasserstoff mit Sauerstoff in einer elektrochemischen Reaktion und erzeugt dabei Wasserdampf und elektrische Energie. Bei Festoxidbrennstoffzellen (Solide Oxide Fuel Cell, SOFC) reagieren an der Anode Sauerstoff mit Wasserstoff zu Wasserdampf. Dagegen ist die Kathode lediglich sauerstoff- oder luftführend. Festoxidbrennstoffzellen arbeiten zumeist bei Temperaturen um 900°C bei hohem Luftüberschuss ($\lambda$ > 2). Bei 800 bis 900°C läuft an der Anode die Reaktion $O^{2-} + H_2 \rightarrow H_2O + 2e^-$ und an der Kathode die Reaktion

$$\frac{1}{2}O_2 + 2e^- \rightarrow 2O^{2-} \text{ ab.}$$

Dementsprechend ist das Abgas der Kathode heiß und trocken.

Bei Karbonatschmelzen-Brennstoffzellen (Molten Carbonate Fuel Cell) findet bei etwa 650°C die Reaktion $H_2 + CO_3^{2-} \rightarrow H_2O + CO_2 + 2e^-$ an der Anode und $CO_2 + \frac{1}{2}O_2 + 2e^- \rightarrow CO_3^{2-}$ an der Kathode statt.

Bei Zeolith-Wärmepumpen wird in der Adsorptionsphase ein Kältemittel von einem Zeolithen aufgenommen, der sich hierdurch erwärmt. Diese Wärme kann für Heizzwecke genutzt werden. Ist der Zeolith mit dem Kältemittel gesättigt, so muss das Kältemittel in der Desorptionsphase wieder ausgetrieben werden. Das Funktionsprinzip einer Adsorptionswärmepumpe ist beispielsweise in der EP 1 074 799 und EP 1 108 964 A2 beschrieben.

Gemäß dem Stand der Technik wird in der Adsorptionsphase das Kältemittel in einem Unterdruckbehälter mittels Umweltwärme verdampft und dann von dem trockenen Zeolithen aufgenommen. In der Desorptionsphase wird üblicherweise das Kältemittel durch Wärmezufuhr wieder ausgetrieben.

US 2003/0157386 A1 offenbart die Kombination einer SOFC-Brennstoffzelle mit einer wärmepumpe gemäß dem Oberbegiff des Auspruchs 1. Das Kathoden- und Anodenabgas werden zusammengeleitet und thermisch in der Wärmepumpe genutzt.

Der Erfindung liegt die Aufgabe zugrunde, eine vorteilhafte Kombination einer Hochtemperatur-Brennstoffzelle mit einer Adsorptionswärmepumpe zu schaffen, wobei die Hochtemperatur-Brennstoffzelle nicht nur die Umweltwärmequelle ersetzt, sondern auch vielmehr der funktionelle Aufbau wesentlich verändert wird.

Erfindungsgemäß wird dies gemäß den Merkmalen des unabhängigen Anspruchs 1 dadurch gelöst, dass die Kathodenabgasleitung einer Hochtemperatur-Brennstoffzelle mit dem Adsorber / Desorber einer Adsorptionswärmepumpe verbunden wird. Hierdurch wird erreicht, dass mittels des äußerst trockenen heißen Kathodenabgases in der Desorptionsphase dem Adsorber / Desorber das Kältemittel entzogen werden kann, das dabei auf das Kathodengas übergeht. Somit muss dem Adsorber / Desorber keine gesonderte Wärme - wie zum Beispiel aus EP 1 074 799 bekannt - zugeführt werden. Vielmehr kann gleichzeitig ein Heizkreislauf, welcher an den Adsorber / Desorber angeschlossen ist, weiterhin derart betrieben werden, dass ihm auch in der Desorptionsphase im Adsorber / Desorber Wärme zugeführt wird.

Vorteilhafte Ausgestaltungen ergeben sich gemäß den Merkmalen der abhängigen Ansprüche.

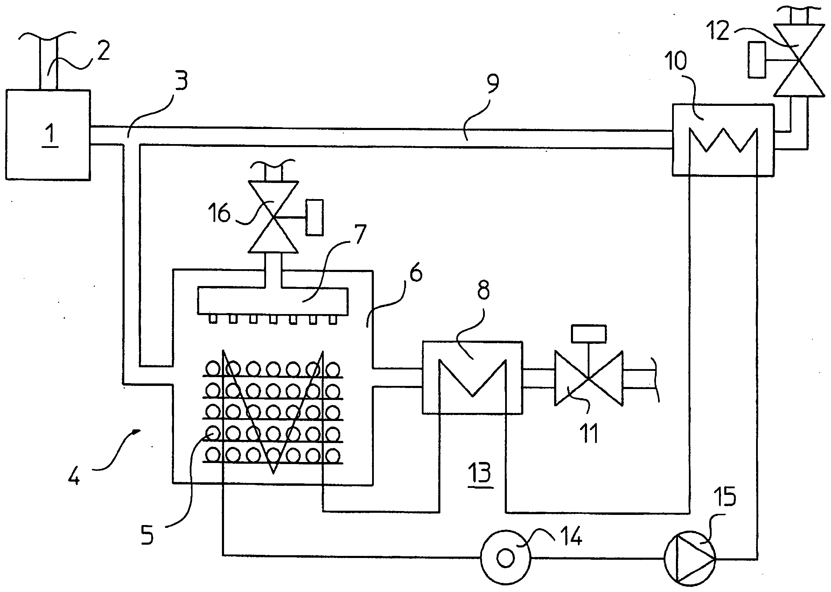

Die Erfindung wird nun anhand der Figur erläutert. Die Figur zeigt eine Hochtemperatur-Brennstoffzelle 1 mit einer Anodenabgasleitung 2 und einer Kathodenabgasleitung 3. Der Verlauf der Anodenabgasleitung 2 ist nicht weiter dargestellt. Die Kathodenabgasleitung 3 verzweigt sich. Einer der Zweige führt zu einem Behälter 6 einer Adsorptionswärmepumpe 4. In dem Behälter 6 befindet sich ein Adsorber / Desorber 5. Der Adsorber / Desorber 5 beinhaltet z. B. einen Zeolithen. Oberhalb des Adsorbers / Desorbers 5 ist eine Sprühvorrichtung 7 angebracht. In der Zuführung zur Sprühvorrichtung 7 befindet sich ein Absperrventil 16. Auf der der Hochtemperatur-Brennstoffzelle 1 abgewandten Seite des Behälters 6 befindet sich ein Wärmeaustauscher 8, dem stromab ein Absperrventil 11 nachgeschaltet ist. Die Umgehungsleitung 9 mündet in einen Wärmeaustauscher 10, dem ein Absperrventil 12 nachgeschaltet ist. Der Adsorber / Desorber 5 sowie die zwei Wärmeaustauscher 8, 10 befinden sich in einem Heizungskreislauf 13 mit Wärmesenke 14 und Umwälzpumpe 15. Bei der Wärmesenke 14 kann es sich sowohl um einen Heizkörper oder eine Warmwasserbereitung handeln.

In der Adsorptionsphase wird das Absperrventil 11 stromab des Behälters 6 geschlossen, wodurch der Behälter 6 nicht von Kathodenabgas durchströmt wird; vielmehr steht etwas Kathodenabgas in dem Behälter 6. Über die Sprühvorrichtung 7 wird bei geöffnetem Absperrventil 16 dem Adsorber 5 Kältemittel zugeführt. Das Kältemittel wird von dem Adsorber 5 aufgenommen, wodurch dieser sich erhitzt. Diese Wärme wird auf den Heizungskreislauf 13 übertragen. Das heiße Kathodenabgas der Umgehungsleitung 9 wird in dem Wärmeaustauscher 10 abgekühlt und hierbei die entstehende Wärme auf den Heizungskreislauf 13 übertragen.

Ist der Adsorber 5 mit Kältemittel gesättigt, so wird das Absperrventil 16 geschlossen und gleichzeitig das Absperrventil 11 für das Kathodenabgas geöffnet. Das Absperrventil 12 stromab der Umgehungsleitung wird nun geschlossen, so dass das Kathodenabgas ausschließlich durch den Behälter 6 strömt.

Da das Kathodenabgas sehr heiß und gleichzeitig sehr trocken ist, nimmt es das Kältemittel aus dem Adsorber / Desorber 5, der nun als Desorber arbeitet, auf. Das derartig befeuchtete und etwas abgekühlte Kathodenabgas strömt in den Wärmeaustauscher 8 und wird dort abgekühlt. Das entstehende Kondensat wird in eine Sammelvorrichtung gegeben, so dass es in der Adsorptionsphase der Sprühvorrichtung zur Verfügung steht.

Es muss darauf geachtet werden, dass der Adsorber / Desorber 5 bei diesem Prozess nicht überhitzt wird; daher muss gegebenenfalls das Kathodenabgas vor dem Einströmen in den Behälter 6 abgekühlt werden. Darüber hinaus muss auch berücksichtigt werden, dass verschiedene Begleitstoffe des Kathodenabgases sich im Adsorber / Desorber 5 festsetzen können und hierdurch den Prozess negativ beeinflussen.

Ist der Desorber völlig getrocknet, so wird die Desorbtionsphase abgeschlossen, in dem das Absperrventil 12 geöffnet und gleichzeitig das Absperrventil 11 geschlossen wird. Es folgt eine zuvor beschriebene Adsorbtionsphase.

Die Positionierung der Absperrventile 11, 12 stromab der Wärmeaustauscher 8, 10 hat zur Folge, dass bei jeweils geschlossenen Ventilen verhältnismäßig kühles Abgas an den Absperrventilen 11, 12 anliegt. Wären die Absperrventile an einer heißeren Stelle angeordnet, so wäre ein hoher Verschleiß zu befürchten, der auf diese Art und Weise umgangen werden kann.

In der Desorptionsphase kann prinzipiell auch das Absperrventil 11 geöffnet bleiben. Bleibt hingegen das Absperrventil 11 in der Adsorptionsphase geöffnet, so wird Kältemittel aus der Sprühvorrichtung 7 unmittelbar auf das Kathodenabgas anstelle des Adsorbers 5 übertragen. Der Adsorptionsprozess wird dadurch wesentlich verlangsamt bzw. kann auch möglicherweise völlig hierdurch unterbunden werden. Um weitere Wärme dem Heizungskreislauf zuzuführen, kann ein Zusatzheizgerät in den Heizungskreislauf 13 integriert werden, welches weitere Wärme abgibt.

Ebenfalls nicht dargestellt ist die thermische Nutzung des Anodenabgases, welches von der Anodenabgasleitung 2 ebenfalls in einem nicht dargestellten Wärmetauscher auf den Heizungskreislauf 13 übertragen werden kann.

Erfindungsgemäß ist auch möglich, anstelle verschiedener Wärmetauscher für das Kathodenabgas, welches durch die Umgehungsleitung 9, den Behälter 6 und die Anodenabgasleitung 2 führt, lediglich einen gemeinsamen Wärmeaustauscher zu verwenden. Hierbei ist jedoch darauf zu achten, dass es zu keinen ungewollten Rückströmungen kommt.

**Patentansprüche**

1. Kombination einer Hochtemperatur-Brennstoffzelle (1) mit einer wasserdampfführenden Anodenabgasleitung (2) und einer trockenen Kathodenabgasleitung (3) mit einer Adsorptionswärmepumpe (4), wobei die Kathodenabgasleitung (3) der Hochtemperatur-Brennstoffzelle (1) mit dem Adsorber / Desorber (5) der Adsorptionswärmepumpe (4) verbunden ist **dadurch gekennzeichnet, dass** der Adsorber / Desorber (5) in einem Behälter (6) angeordnet ist und nur die Kathodenabgasleitung (3) in diesen Behälter (6) führt.

2. Kombination einer Hochtemperatur-Brennstoffzelle (1) mit einer Adsorptionswärmepumpe (4) nach Anspruch 1, **dadurch gekennzeichnet, dass** oberhalb oder seitlich des Adsorbers / Desorbers (5) eine Kältemittel führende Sprühvorrichtung (7) angeordnet ist.

3. Kombination einer Hochtemperatur-Brennstoffzelle (1) mit einer Adsorptionswärmepumpe (4) nach einem der Ansprüche 1 oder 2, **dadurch gekennzeichnet, dass** stromab des Behälters (6) mit dem Adsorber / Desorber (5) abgasseitig ein Wärmeaustauscher (8) angeordnet ist.

4. Kombination einer Hochtemperatur-Brennstoffzelle (1) mit einer Adsorptionswärmepumpe (4) nach einem der Ansprüche 2 bis 3, **dadurch gekennzeichnet, dass** parallel zum Behälter (6) mit dem Adsorber / Desorber (5) abgasseitig eine Umgehungsleitung (9) angeordnet ist, die vorzugsweise in einen Wärmeaustauscher (10) mündet.

5. Kombination einer Hochtemperatur-Brennstoffzelle (1) mit einer Adsorptionswärmepumpe (4) nach einem der Ansprüche 3 und / oder 4, **dadurch gekennzeichnet, dass** stromab des Wärmeaustauschers (8) stromab des Behälters (6) ein Absperrventil (11) angeordnet ist und vorzugsweise stromab des Wärmeaustauschers (10) stromab der Umgehungsleitung (9) ein Absperrventil (12) angeordnet ist.

6. Kombination einer Hochtemperatur-Brennstoffzelle (1) mit einer Adsorptionswärmepumpe (4) nach einem der Ansprüche 1 bis 5, **dadurch gekennzeichnet, dass** der Adsorber / Desorber (5) sowie vorzugsweise der Wärmeaustauschers (8) stromab des Behälters (6) und der Wärmeaustauscher (10) stromab der Umgehungsleitung (9) in einen Heizungskreislauf (13) mit Wärmesenke (14) und Umwälzpumpe (15) eingebunden sind.

7. Kombination einer Hochtemperatur-Brennstoffzelle (1) mit einer Adsorptionswärmepumpe (4) nach Anspruch 6, **dadurch gekennzeichnet, dass** auch ein Zusatzheizgerät zur Beheizung des Heizungskreislauf (13) vorhanden ist.

8. Verfahren zum Betrieben einer Kombination einer Hochtemperatur-Brennstoffzelle (1) mit einer Adsorptionswärmepumpe (4) nach einem der Ansprüche 1 bis 7, **dadurch gekennzeichnet, dass** in der Desorptionsphase heißes, trockenes Kathodenabgas der Hochtemperatur-Brennstoffzelle (1) über den Adsorber / Desorber (5) geleitet wird.

9. Verfahren zum Betrieben einer Kombination einer Hochtemperatur-Brennstoffzelle (1) mit einer Adsorptionswärmepumpe (4) nach Anspruch 8, **dadurch gekennzeichnet, dass** in der Adsorptionsphase Kältemittel auf den Adsorber / Desorber (5) gesprüht wird.

10. Verfahren zum Betrieben einer Kombination einer Hochtemperatur-Brennstoffzelle (1) mit einer Adsorptionswärmepumpe (4) nach Anspruch 8 oder 9, **dadurch gekennzeichnet, dass** in der Desorptionsphase das Absperrventil (12) stromab der Umgehungsleitung (9) geschlossen ist.

11. Verfahren zum Betrieben einer Kombination einer Hochtemperatur-Brennstoffzelle (1) mit einer Adsorptionswärmepumpe (4) nach einem der Ansprüche 8 bis 10, **dadurch gekennzeichnet, dass** in der Adsorptionsphase das Absperrventil (11) stromab des Wärmeaustauschers (8) stromab des Behälters (6) geschlossen ist.

12. Verfahren zum Betrieben einer Kombination einer Hochtemperatur-Brennstoffzelle (1) mit einer Adsorptionswärmepumpe (4) nach einem der Ansprüche 8 bis 11, **dadurch gekennzeichnet, dass** das Kondensat, welches in dem Wärmeaustauscher (8) stromab des Behälters (6) gebildet wird, der Sprühvorrichtung (7) für die Adsorptionsphase zugeführt wird.

## Claims

1. Combination of a high temperature fuel cell (1) with an anode exhaust gas line (2) conveying water vapour and a dry cathode exhaust gas line (3) with an adsorption heat pump (4), wherein the cathode exhaust gas line (3) of the high temperature fuel cell (1) is connected with the adsorber / desorber (5) of the adsorption heat pump (4), the adsorber / desorber (5) is disposed in a container (6) and only the cathode exhaust gas line (3) leads into this container (6).

2. Combination of a high temperature fuel cell (1) with an adsorption heat pump (4) according to claim 1, **characterised in that** above or next to the adsorber / desorber (5) is disposed a spraying device (7) conveying a cooling agent.

3. Combination of a high temperature fuel cell (1) with an adsorption heat pump (4) according to one of claims 1 or 2, **characterised in that** downstream from the container (6) with the adsorber / desorber (5) is disposed on the exhaust side a heat exchanger (8).

4. Combination of a high temperature fuel cell (1) with an adsorption heat pump (4) according to one of claims 2 or 3, **characterised in that** parallel to the container (6) with the adsorber / desorber (5) is disposed on the exhaust side a bypass line (9) which opens preferably into a heat exchanger (10).

5. Combination of a high temperature fuel cell (1) with an adsorption heat pump (4) according to one of claims 3 and/or 4, **characterised in that** downstream from the heat exchanger (8) downstream from the container (6) is disposed a shut-off valve (11) and preferably downstream from the heat exchanger (10) downstream from the bypass line (9) disposed a shut-off valve (12).

6. Combination of a high temperature fuel cell (1) with an adsorption heat pump (4) according to one of claims 1 to 5, **characterised in that** the adsorber / desorber (5) as well as preferably the heat exchanger (8) downstream from the container (6) and the heat exchanger (10) downstream from the bypass line (9) are connected into a heating circuit (13) with heat sink (14) and circulation pump (15).

7. Combination of a high temperature fuel cell (1) with an adsorption heat pump (4) according to claim 6, **characterised in that** an additional heating device for heating the heating circuit (13) is also present.

8. Method for operating a combination of a high temperature fuel cell (1) with an adsorption heat pump (4) according to one of claims 1 to 7, **characterised in that** in the desorption phase hot, dry cathode exhaust gas from the high temperature fuel cell (1) is guided over the adsorber / desorber (5).

9. Method for operating a combination of a high temperature fuel cell (1) with an adsorption heat pump (4) according to claim 8, **characterised in that** in the adsorption phase cooling agent is sprayed onto the adsorber / desorber (5).

10. Method for operating a combination of a high temperature fuel cell (1) with an adsorption heat pump (4) according to claim 8 or 9, **characterised in that** in the desorption phase, the shut-off valve (12) downstream from the bypass line (9) is shut.

11. Method for operating a combination of a high temperature fuel cell (1) with an adsorption heat pump (4) according to one of claims 8 to 10, **characterised in that** in the adsorption phase the shut-off valve (11) downstream from the heat exchanger (8) downstream from the container (6) is shut.

12. Method for operating a combination of a high temperature fuel cell (1) with an adsorption heat pump (4) according to one of claims 8 to 11, **characterised in that** the condensed material, which is formed in the heat exchanger (8) downstream from the container (6), is supplied to the spraying device (7) for the adsorption phase.

**Revendications**

1. Combinaison d'une cellule combustible à haute température (1) avec une conduite de gaz d'échappement d'anode (2) acheminant de la vapeur d'eau et une conduite de gaz d'échappement de cathode (3) sèche avec une pompe à chaleur d'adsorption (4), dans laquelle la conduite de gaz d'échappement de cathode (3) de la cellule combustible à haute température (1) est raccordée à l'adsorbeur / désorbeur (5) de la pompe à chaleur d'adsorption (4), l'adsorbeur / désorbeur (5) est agencé dans un récipient (6) et seule la conduite de gaz d'échappement de cathode (3) mène à ce récipient (6).

2. Combinaison d'une cellule combustible à haute température (1) avec une pompe à chaleur d'adsorption (4) selon la revendication 1, **caractérisée en ce qu'**un dispositif de pulvérisation (7) acheminant un agent réfrigérant est agencé au-dessus de ou latéralement à l'adsorbeur / désorbeur (5).

3. Combinaison d'une cellule combustible à haute température (1) avec une pompe à chaleur d'adsorption (4) selon l'une quelconque des revendications 1 ou 2, **caractérisée en ce qu'**un échangeur de chaleur (8) est agencé en aval du récipient (6) avec l'adsorbeur / désorbeur (5) côté gaz d'échappement.

4. Combinaison d'une cellule combustible à haute température (1) avec une pompe à chaleur d'adsorption (4) selon l'une quelconque des revendications 2 et 3, **caractérisée en ce qu'**une conduite de dérivation (9) est agencée parallèlement au récipient (6) avec l'adsorbeur / désorbeur (5) côté gaz d'échappement, laquelle débouche de préférence dans un échangeur de chaleur (10).

5. Combinaison d'une cellule combustible à haute température (1) avec une pompe à chaleur d'adsorption (4) selon l'une quelconque des revendications 3 et/ou 4, **caractérisée en ce qu'**une soupape de blocage (11) est agencée en aval de l'échangeur de chaleur (8) en aval du récipient (6) et une soupape de blocage (12) est agencée de préférence en aval de l'échangeur de chaleur (10) en aval de la conduite de dérivation (9).

6. Combinaison d'une cellule combustible à haute température (1) avec une pompe à chaleur d'adsorption (4) selon l'une quelconque des revendications 1 à 5, **caractérisée en ce que** l'adsorbeur / désorbeur (5) ainsi que de préférence l'échangeur de chaleur (8) en aval du récipient (6) et l'échangeur de chaleur (10) en aval de la conduite de dérivation (9) sont intégrés dans un circuit de chauffage (13) avec un puits de chaleur (14) et la pompe de recirculation (15).

7. Combinaison d'une cellule combustible à haute température (1) avec une pompe à chaleur d'adsorption (4) selon la revendication 6, **caractérisée en ce qu'**un appareil de chauffage supplémentaire est aussi présent pour le chauffage du circuit de chauffage (13).

8. Procédé de fonctionnement d'une combinaison d'une cellule combustible à haute température (1) avec une pompe à chaleur d'adsorption (4) selon l'une quelconque des revendications 1 à 7, **caractérisé en ce que** dans la phase de désorption du gaz d'échappement de cathode sec chaud de la cellule combustible à haute température (1) est conduit par le biais de l'adsorbeur / désorbeur (5).

9. Procédé de fonctionnement d'une combinaison d'une cellule combustible à haute température (1) avec une pompe à chaleur d'adsorption (4) selon la revendication 8, **caractérisé en ce que** dans la phase d'adsorption du réfrigérant est pulvérisé sur l'adsorbeur / désorbeur (5).

10. Procédé de fonctionnement d'une combinaison d'une cellule combustible à haute température (1) avec une pompe à chaleur d'adsorption (4) selon la revendication 8 ou 9, **caractérisé en ce que** dans la phase de désorption la soupape de blocage (12) est fermée en aval de la conduite de dérivation (9).

11. Procédé de fonctionnement d'une combinaison d'une cellule combustible à haute température (1) avec une pompe à chaleur d'adsorption (4) selon l'une quelconque des revendications 8 à 10, **caractérisé en ce que** dans la phase d'adsorption la soupape de blocage (11) est fermée en aval de l'échangeur de chaleur (8) en aval du récipient (6).

12. Procédé de fonctionnement d'une combinaison d'une cellule combustible à haute température (1) avec une pompe à chaleur d'adsorption (4) selon l'une quelconque des revendications 8 à 11, **caractérisé en ce que** le condensat qui est formé dans l'échangeur de chaleur (8) en aval du récipient (6), est amené au dispositif de pulvérisation (7) pour la

phase d'adsorption.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1074799 A
- EP 1108964 A2

- US 20030157386 A1